# EUROPEAN PATENT APPLICATION

(11) **EP 4 645 008 A1**
(43) Date of publication of application: **05.11.2025**
(21) Application number: 23911377.2
(22) Date of filing: 31.10.2023
(51) Int. Cl.: G05B 19/05

(54) **CONTROL SYSTEM, CONTROL METHOD FOR CONTROL SYSTEM, AND CONTROLLER**

(30) Priority: 27.12.2022 JP 2022210555
(71) Applicant: Yokogawa Electric Corporation, Tokyo 180-8750 (JP)
(72) Inventor: YOSHIDA Yoshitaka, Musashino-shi, Tokyo 180-8750 (JP); TOINAGA Takeshi, Musashino-shi, Tokyo 180-8750 (JP)
(74) Representative: Zimmermann, Tankred Klaus
(86) International application number: PCT/JP2023/039310
(87) International publication number: WO 2024/142593

(57) **Abstract**

An IO node to which field instruments that acquire measurement data are connected, multiple controllers that perform calculation based on the measurement data acquired by the field instruments, and a cache server are included. At each of control timings that are regular periods of time predetermined at regular intervals, each of the multiple controllers determines whether the measurement data acquired by the field instruments is being held. When the cache server is not holding the measurement data, each of the multiple controllers acquires, from the IO node, the measurement data acquired by the field instruments connected to the IO node. When the cache server is holding the measurement data, each of the multiple controllers acquires, from the cache server, the measurement data acquired by the field instruments. Each of the multiple controllers performs predetermined calculation based on the measurement data received from the IO node or the cache server.

## Description

### CROSS-REFERENCE TO RELATED APPLICATION

This application claims priority to Japanese Patent Application No. 2022-210555, filed on December 27, 2022, the entire contents of which are incorporated herein by reference.

### TECHNICAL FIELD

The present disclosure relates to a control system, a control method for a control system, and a controller.

### BACKGROUND

Patent Literature (PTL) 1 describes a control system that controls operations of a field instrument from a controller via an IO node, which is a device to which the field instrument is connected.

### CITATION LIST

### Patent Literature

PTL 1: JP 2021-157392 A

### SUMMARY

### (Technical Problem)

In a control system as described above, it is conceivable to provide multiple controllers, cause each of the controllers to perform the same processing for input and output of a field instrument, and compare processing results of the respective controllers in order to improve the reliability of operations of the controllers. In the case of implementing such redundancy of the controllers, in conventional configurations, it is necessary for the multiple controllers to operate in high-precision temporal synchronization, which makes processing and configurations complex.

The present disclosure aims at enabling redundancy of controllers with a simpler configuration, in a control system for a field instrument.

### (Solution to Problem)

A control system according to some embodiments is
(1) a control system including:
   an IO node to which a field instrument configured to acquire measurement data is connected;
   multiple controllers configured to perform calculation based on the measurement data acquired by the field instrument; and
   a cache server,
   wherein each of the multiple controllers is configured to:
      at each of control timings that are regular periods of time predetermined at regular intervals, determine whether the measurement data acquired by the field instrument is being held;
      when the cache server is not holding the measurement data, acquire, from the IO node, the measurement data acquired by the field instrument connected to the IO node;
      when the cache server is holding the measurement data, acquire, from the cache server, the measurement data acquired by the field instrument; and
      perform predetermined calculation based on the measurement data received from the IO node or the cache server.

As described above, even when the respective controllers operate asynchronously, the controllers can acquire the same measurement data at the control timing from the IO node or the cache server. Therefore, it is possible to detect an anomaly in the controllers by performing, by all the controllers, the calculation based on the same measurement data at the control timing and comparing the results of the calculation.

(2) In the control system according to (1),
each of the multiple controllers is configured to, at each of the control timings, query the cache server whether the cache server is holding the measurement data, and determine whether the cache server is holding the measurement data, based on a reply of the cache server to the query.

As described above, since the controller determines, by querying the cache server, whether the cache server is holding the measurement data, the controller can precisely determine whether the cache server is holding the measurement data.

(3) In the control system according to (1),
the cache server is configured to hold a first management table containing information indicating, at each of the control timings, whether the cache server is holding the measurement data, and
each of the multiple controllers is configured to:
   hold a second management table that is managed in synchronization with the first management table held by the cache server; and
   at each of the control timings, determine whether the cache server is holding the measurement data, with reference to the second management table.

As described above, since the controller holds the second management table, which is managed in synchronization with the first management table, and determine whether the cache server is holding the measurement data with reference to the second management table, the controller can determine whether the cache server is holding the measurement data, without querying the cache server at the control timing, at which the calculation is performed based on the measurement data.

(4) In the control system according to any one of (1) to (3),
each of the multiple controllers is configured to transmit, at each of the control timings to the IO node, a calculation result that is a result of the calculation based on the measurement data received from the IO node or the cache server, and
the IO node is configured to:
   at each of the control timings, determine whether operations of the multiple controllers are normal, by comparing the calculation results received from the respective multiple controllers; and
   output a determination result of whether the operations of the multiple controllers are normal.

As described above, the control system can detect an anomaly in the controllers by comparing the calculation results of the multiple controllers. In addition, whether the operations of the controllers are normal is determined based on the calculation results received within the control timing, so it is possible to prevent the use of a calculation result of a controller that has failed to transmit the calculation result within the control timing, in determining whether the operations are abnormal.

(5) In the control system according to any one of (1) to (4),
upon acquiring, from the IO node, the measurement data acquired by the field instrument connected to the IO node, each of the multiple controllers is configured to transmit the acquired measurement data to the cache server,
upon receiving the measurement data from the controller included in the multiple controllers, the cache server is configured to cause a memory to hold the received measurement data.

As described above, the control system makes and holds a cache of the measurement data received from the controller that has first accessed the cache server. Therefore, the other controller can acquire this measurement data by accessing the cache server, and perform the calculation based on the same measurement data at the control timing.

(6) In the control system according to (5),
the cache server is configured to, at each of the control timings, record identification information on the controller from which the measurement data is received.

As described above, since the cache server records the identification information on the controller that has transmitted the cache of the measurement data, it is possible to identify the controller that has transmitted the cache data, with reference to the record.

(7) In the control system according to (5) or (6),
at each of the control timings, from the time of first receiving, from any controller included in the multiple controllers, a query whether the cache server is holding the measurement data acquired by the field instrument, until the time of receiving the measurement data from that controller, the cache server is configured to withhold a reply to a query from another controller.

As described above, when there is a first query from a controller in a certain temporal section, the control system holds a query from another controller until the time of receiving the measurement data from that controller. Therefore, when another controller makes a query while a certain controller is acquiring the measurement data from the IO node, all the controllers can acquire the same measurement data at the control timing, without access of the other controller to the IO node.

A control method for a control system according to some embodiments is
(8) a control method for a control system including:
an IO node to which a field instrument configured to acquire measurement data is connected;
multiple controllers configured to perform calculation based on the measurement data acquired by the field instrument; and
a cache server,
the control method including:
   at each of control timings that are regular periods of time predetermined at regular intervals, determining, by each of the multiple controllers, whether the measurement data acquired by the field instrument is being held;
   when the cache server is not holding the measurement data, acquiring, by each of the multiple controllers from the IO node, the measurement data acquired by the field instrument connected to the IO node;
   when the cache server is holding the measurement data, acquiring, by each of the multiple controllers from the cache server, the measurement data acquired by the field instrument; and
   performing, by each of the multiple controllers, predetermined calculation based on the measurement data received from the IO node or the cache server.

As described above, even when the respective controllers operate asynchronously, the controllers can acquire the same measurement data at the control timing from the IO node or the cache server. Therefore, it is possible to detect an anomaly in the controllers by performing, by all the controllers, the calculation based on the same measurement data at the control timing and comparing the results of the calculation.

A controller according to some embodiments is
(9) a controller configured to be communicable with a cache server, and an IO node to which a field instrument configured to acquire measurement data is connected, the controller configured to perform calculation based on the measurement data acquired by the field instrument, the controller including a controller configured to:
at each of control timings that are regular periods of time predetermined at regular intervals, determining whether the measurement data acquired by the field instrument is being held;
when the cache server is not holding the measurement data, acquiring, from the IO node, the measurement data acquired by the field instrument connected to the IO node;
when the cache server is holding the measurement data, acquiring, from the cache server, the measurement data acquired by the field instrument; and
performing predetermined calculation based on the measurement data received from the IO node or the cache server.

As described above, even when the respective controllers operate asynchronously, the controllers can acquire the same measurement data at the control timing from the IO node or the cache server. Therefore, it is possible to detect an anomaly in the controllers by performing, by all the controllers, the calculation based on the same measurement data at the control timing and comparing the results of the calculation.

### (Advantageous Effect)

According to one embodiment of the present disclosure, it is possible to achieve redundancy of controllers with a simpler configuration, in a control system for a field instrument.

### BRIEF DESCRIPTION F THE DRAWINGS

In the accompanying drawings:
FIG. 1 is a diagram illustrating a configuration of a control system according to a comparative example;
FIG. 2 is a diagram illustrating an example of a schematic configuration of a control system according to one embodiment;
FIG. 3 is a block diagram illustrating an example of a functional configuration of the control system in FIG. 2;
FIG. 4 is a diagram illustrating an example of a management table in FIG. 3;
FIG. 5 is a diagram illustrating an example of the management table in FIG. 3;
FIG. 6 is a block diagram illustrating an example of a hardware configuration of an IO node in FIG. 2;
FIG. 7 is a block diagram illustrating an example of a hardware configuration of a controller in FIG. 2;
FIG. 8 is a block diagram illustrating an example of a hardware configuration of a cache server in FIG. 2;
FIG. 9 is a sequence chart illustrating an example of operations of a control system according to one embodiment;
FIG. 10 is a sequence chart illustrating an example of operations of a control system according to one embodiment;
FIG. 11 is a diagram illustrating an example of a schematic configuration of a control system according to one embodiment.
FIG. 12 is a block diagram illustrating an example of a hardware configuration of a network switch in FIG. 11;
FIG. 13 is a sequence chart illustrating an example of operations of a control system according to one embodiment; and
FIG. 14 is a sequence chart illustrating an example of operations of a control system according to one embodiment.

### DETAILED DESCRIPTION

### <Comparative Example>

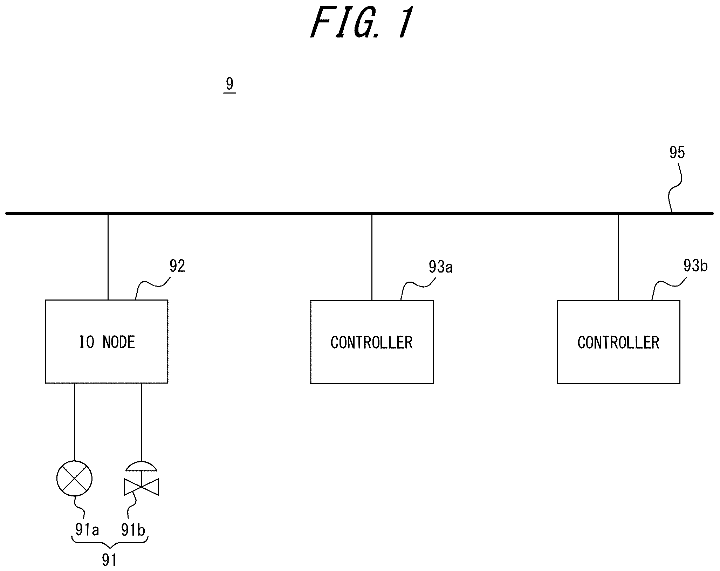

FIG. 1 is a diagram illustrating a configuration of a control system 9 according to a comparative example. The control system 9 includes field instruments 91 (91a, 91b), an IO (Input/Output) node 92, and controllers 93 (93a, 93b). The IO node 92 and the controllers 93 (93a, 93b) are communicably connected to each other via a network 95.

The field instruments 91 (91a, 91b) are devices that perform at least one of acquisition of measurement data for controlling a plant, or operation of the plant. The IO node 92 is a device to which the field instruments 91 (91a, 91b) are connected and that functions as an interface with the controllers 93 (93a, 93b). The controllers 93 (93a, 93b) are devices that perform calculation on the measurement data on the field instruments 91 (91a, 91b), and control the field instruments 91 (91a, 91b) based on calculation results.

In the control system 9, the IO node 92 collects the measurement data from the field instruments 91 (91a, 91b) at regular intervals (e.g., every second). Each of the controllers 93a, 93b acquires the measurement data on the field instruments 91 (91a, 91b) from the IO node 92 at regular intervals (e.g., every second). The controllers 93 (93a, 93b) perform calculation based on the acquired measurement data, and transmit calculation results to the IO node 92. Upon receiving the calculation results from the controllers 93 (93a, 93b), the IO node outputs the received calculation results to the field instruments.

In the example illustrated in FIG. 1, in order to improve the reliability of the calculation by the controllers 93 (93a, 93b), the control system 9 includes the multiple controllers 93a, 93b, and compares the calculation results of the controllers 93a, 93b. Specifically, each of the controllers 93a, 93b performs the same calculation on the same measurement data on the field instruments 91 (91a, 91b), and outputs the calculation result to the IO node 92. The IO node 92 compares the calculation results received from the controllers 93a, 93b. When the calculation results received from the multiple controllers 93a, 93b match, the IO node 92 determines that the calculation is performed normally, and when the calculation results do not match, the IO node 92 determines that the calculation is not performed correctly, due to a failure of the controllers 93a, 93b, or the like. In order to improve the reliability of the calculation by redundancy of the controllers 93 (93a, 93b), it is necessary for the controllers 93 (93a, 93b) to acquire the measurement data of the same timing from the IO node 92 and perform the same calculation.

In general, the timing at which the IO node 92 collects the measurement data from the field instruments 91 (91a, 91b) is not in synchronization with the timings at which the controllers 93 (93a, 93b) collect the measurement data from the IO node 92. Therefore, when the timings at which the controller 93a and the controller 93b acquire the measurement data from the IO node 92 are out of synchronization, the same measurement data may not be acquirable. However, to synchronize calculation operation timings of the controllers 93a, 93b, high-precision time synchronization is required, which makes processing and configuration complex. The high-precision time synchronization is also required in the controllers 93 (93a, 93b) to synchronize data acquisition timings between the IO node 92 and the controllers 93a, 93b.

As described above, in the control system 9 according to the comparative example, the multiple controllers 93 (93a, 93b) need to operate in high-precision temporal synchronization, which makes processing and configuration complex. The present disclosure aims at enabling multiple controllers to acquire measurement data of the same timing, without high-precision temporal synchronization.

### <Embodiment 1>

An embodiment of the present disclosure will be described below with reference to the drawings. In the respective drawings, the same reference numerals denote components that have the same configurations or functions. In the description of the present embodiment, duplicated description for the same components may be omitted or simplified as appropriate.

### (Control System)

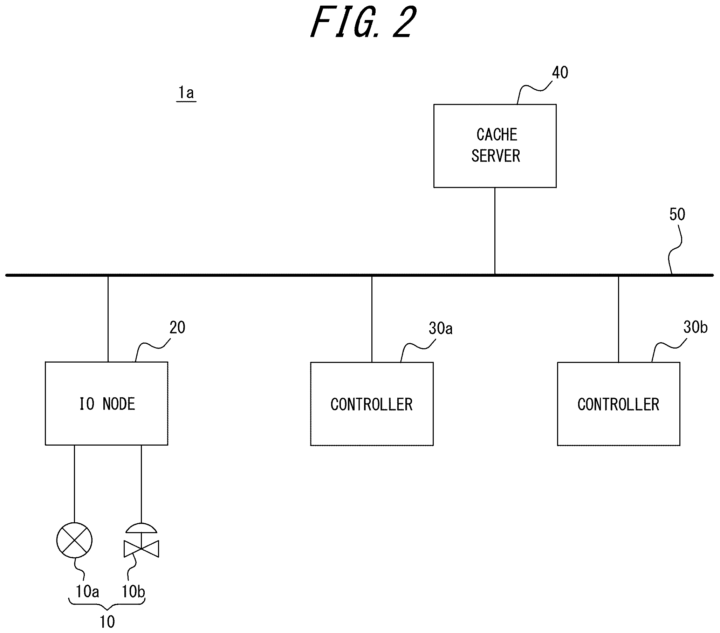

FIG. 2 is a diagram illustrating an example of a schematic configuration of a control system 1a according to one embodiment. The control system 1a includes field instruments 10 (10a, 10b), an IO node 20, controllers 30 (30a, 30b), a cache server 40, and a network 50.

The field instruments 10 (10a, 10b) are devices that perform at least one of acquisition of measurement data for controlling a plant, or operation of the plant. The field instruments 10 (10a, 10b) may be, for example, a sensor 10a such as a temperature sensor or a flowmeter, and an actuator 10b such as a valve device, fan, or motor. Hereinafter, the field instruments 10a, 10b may be collectively referred to as "field instruments 10". The field instruments 10 output the measurement data to the IO node 20, and control operations based on a control signal received from the IO node 20. In the example in FIG. 2, the control system 1a has two field instruments 10a, 10b, but the number of field instruments 10 is arbitrary.

The IO node 20 is a device to which the field instruments 10 are connected and that functions as an interface between the field instruments 10 and the controllers 30 (30a, 30b). The IO node 20 is connected to the network 50, and can communicate with the controllers 30 (30a, 30b) via the network 50. In the example of FIG. 2, the control system 1a has one IO node 20, but the number of IO nodes 20 is arbitrary. Also, the number of field instruments 10 connected to each IO node 20 is arbitrary.

The controllers 30 (30a, 30b) are devices that perform calculation on the measurement data on the field instruments 10 and control the field instruments 10 based on calculation results. Hereinafter, the controllers 30a, 30b may be collectively referred to as "controllers 30". The controllers 30 are configured to be communicable with the IO node 20 and the cache server 40 via the network 50. The controllers 30 can access the field instruments 10 via the IO node 20. The control system 1a has two controllers 30a, 30b, but the number of controllers 30 can be any number of two or more.

The cache server 40 is a device to which one of the controllers 30a, 30b that has first accessed to the cache server 40 holds the measurement data acquired from the IO node 20, as a cache. The control system 1a has one cache server 40, but the number of cache servers 40 is arbitrary.

The network 50 is a dedicated communication network to which information devices such as the IO node 20, controllers 30, and cache server 40 within the plant can be connected. The network 50 may include a wired or wireless local area network (LAN). The wired LAN includes, for example, Ethernet. The wireless LAN includes a wireless network that conforms to a wireless communication standard such as Wi-Fi^{®} (Wi-Fi is a registered trademark in Japan, other countries, or both) and WiMAX^{®} (WiMAX is a registered trademark in Japan, other countries, or both). Furthermore, a communication network that uses a standardized protocol such as OPC UA or PROFINET may also be used. Furthermore, the network 50 may include, for example, the Internet, an intranet, a mobile communication network, and the like.

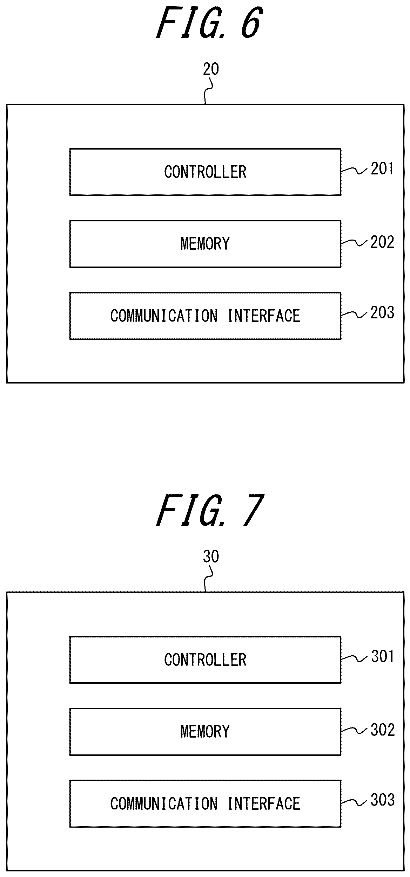

In the control system 1a, the IO node 20 collects the measurement data from the field instruments 10 at regular intervals (e.g., every second). The IO node 20 stores the collected measurement data in a memory 202 (see FIG. 6). Each of the controllers 30a, 30b accesses the cache server 40 at regular intervals (e.g., every second) and performs processing to acquire the measurement data on the field instruments 91 (91a, 91b). Here, the IO node 20 and the controllers 30a and 30b do not operate completely in temporal synchronization, but each operate separately at regular intervals.

In such a configuration, only one of the multiple controllers 30 (30a, 30b) that has first accessed the cache server 40 accesses the IO node 20 and acquires the measurement data. For example, when the controller 30a has first accessed the cache server 40, the controller 30a accesses the IO node 20 and acquires the measurement data on the field instruments 10 from the IO node 20. The controller 30a transmits the acquired measurement data to the cache server 40, and causes the cache server 40 to hold a cache of the measurement data. Meanwhile, the controller 30b that has later accessed the cache server 40 acquires the cache of the measurement data from the cache server 40. In this way, in the control system 1a, only the controller 30 (e.g., controller 30a) that has first accessed the cache server 40 acquires the measurement data on the field instruments 10 from the IO node 20. The other controller (e.g., controller 30b) acquires the cache of the measurement data from the cache server 40. Therefore, even when the respective controllers do not operate in high-precision synchronization, the control system 1a can guarantee that the multiple controllers 30 (30a, 30b) acquire the same measurement data.

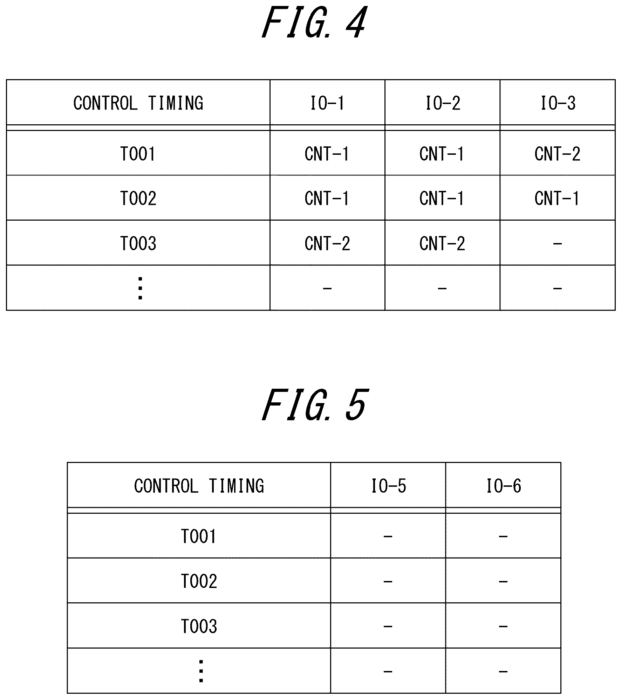

Each of the controllers 30 (30a, 30b) performs calculation based on the acquired measurement data, and transmits a calculation result to the IO node 20. Upon receiving the calculation result from each of the controllers 30 (30a, 30b), the IO node 20 determines whether operations of the respective controllers 30 (30a, 30b) are normal, by comparing the received calculation results. The IO node 20 outputs a determination result as log information to the memory 302 (see FIG. 5), a display device (display), or the like. The IO node 20 may transmit the determination result to another device such as the controllers 30 or the cache server 40.

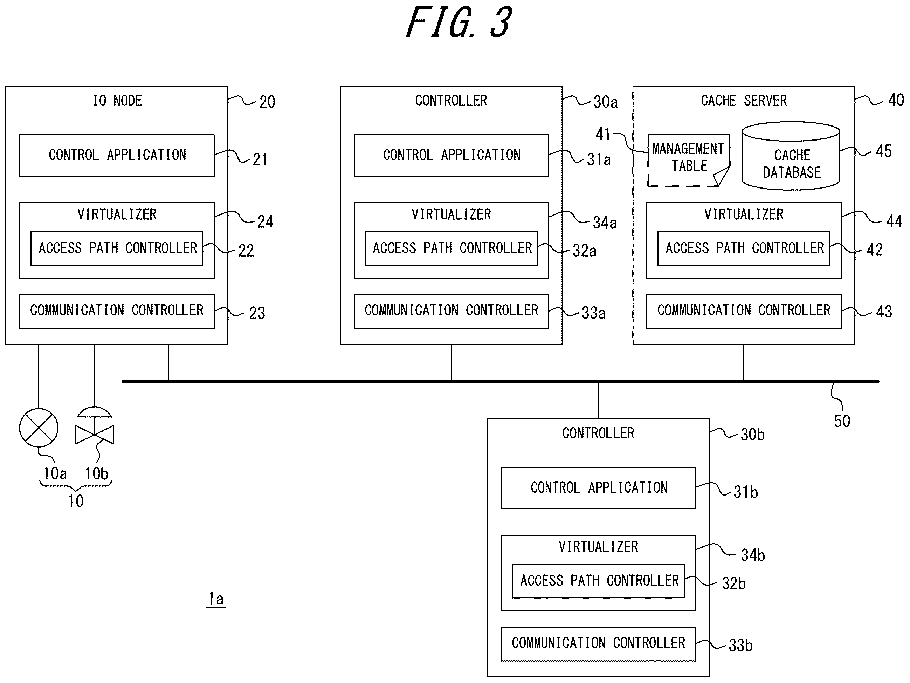

FIG. 3 is a block diagram illustrating an example of a functional configuration of the control system 1a in FIG. 2. The IO node 20 includes a control application 21, an access path controller 22, and a communication controller 23.

The control application 21 controls the field instruments 10 connected to the IO node 20. The control application 21 may run on an operating system. The control application 21 controls the field instruments 10 that are necessary for process control. For example, the control application 21 performs collection of the measurement data from the field instruments 10, transmission of control data to the field instruments 10, and the like.

The access path controller 22 provides an abstracted IO access method to the control application 21. The access path controller 22 adaptively modifies the access method according to the physical relationship between the IO node 20 on which the access path controller 22 is mounted and the field instruments 10. In order to abstract hardware, the access path controller 22 may be included in a virtualizer 24 within the IO node 20. The virtualizer 24 operates virtually on the hardware of the IO node 20, as a substitute for the hardware. The virtualizer 24 is provided to enable replacement of the hardware of the IO node 20 without changing the control application 21. However, the virtualizer 24 is not necessarily required to provide the functions of the access path controller 22. It is possible to implement the access path controller 22 even without the virtualizer 24.

The communication controller 23 performs communication between the field instruments 10 connected to the IO node 20 and the controllers 30 connected to the network 50. The communication controller 23 performs necessary communication processing according to a connection configuration with the field instruments 10, the type of network 50, and the like.

The controllers 30 (30a, 30b) include control applications 31 (31a, 31b), access path controllers 32 (32a, 32b), and communication controllers 33 (33a, 33b). As with the IO node 20, the controllers 30 (30a, 30b) may include virtualizers 34 (34a, 34b). The control application 31a, access path controller 32a, communication controller 33a, and virtualizer 34a of the controller 30a are the same as the control application 31b, access path controller 32b, communication controller 33b, and virtualizer 34b of the controller 30b. Hereinafter, the control applications 31a, 31b, the access path controllers 32a, 32b, the communication controllers 33a, 33b, and the virtualizers 34a, 34b may be collectively referred to as "control applications 31", "access path controllers 32", "communication controllers 33", and "virtualizers 34", respectively. The control applications 31, access path controllers 32, communication controllers 33, and virtualizers 34 of the controllers 30 have the same or similar functions as the control application 21, access path controller 22, communication controller 23, and virtualizer 24 of the IO node 20, so detailed descriptions are omitted.

The cache server 40 includes a management table 41, an access path controller 42, a communication controller 43, and a cache database 45.

The management table 41 is a table for managing the status of access of the controllers 30 to the cache server 40. FIGS. 4 and 5 are diagrams illustrating examples of the management table in FIG. 3. The cache server 40 holds, at regular intervals (e.g., every second), identification information on the controller 30 that has first accessed the cache server 40. In an initial state, the management table 41 holds a value of blank, "0", "-", or the like ("-" in the example of FIGS. 4 and 5). In the examples of FIGS. 4 and 5, control timings indicate regular periods of time predetermined at regular intervals for the controllers 30 to periodically acquire the measurement data. A control timing T001 corresponds to a period from 0:00:00 to 0:00:01, for example. A control timing T002 corresponds to a period from 0:00:01 to 0:00:02, for example. A control timing T003 corresponds to a period from 0:00:02 to 0:00:03, for example. In these examples, the control timings T001 to T003 correspond to periods of one second in length determined with intervals of one second. The intervals and length of the control timings may differ, and, for example, the control timings may be periods of one second in length determined with intervals of 10 seconds. The control timings are determined based on time measured by a clock of the cache server 40, but may be determined based on time measured by a time server such as a Network Time Protocol (NTP) server or other devices such as the controllers 30. When the control timings are determined based on time measured by the time server, it is possible to acquire the control timings that reflect correct time, so the reliability of the control timings can be maintained. When the control timings are determined based on time measured by each controller 30, each controller 30 can determine the control timings without accessing another device such as a time server, so availability can be maintained.

There is one IO node 20 in the example in FIG. 2, but the management table 41 in FIG. 4 holds identification information on the controller 30 that has first accessed the cache server 40 in the control system 1a with three IO nodes 20 (IO-1, IO-2, IO-3). The management table 41 in FIG. 5 holds identification information on the controller 30 that has first accessed the cache server 40 in the control system 1a with two IO nodes 20 (IO-5, IO-6).

For example, in FIG. 4, at the control timing "T001", the controller 30 (e.g., controller 30a) with identification information "CNT-1" first accesses the cache server 40 for the IO nodes 20 with identification information "IO-1" and "IO-2". For the IO node 20 of "IO-3", the controller 30 (e.g., controller 30b) with identification information "CNT-2" first accesses the cache server 40. At the control timing "T002", the controller 30 (e.g., controller 30a) with the identification information "CNT-1" first accesses the cache server 40 for each of the IO nodes 20 with the identification information "IO-1", "IO-2", and "IO-3". At the control timing "T003", the controller 30 (e.g., controller 30b) with the identification information "CNT-2" first accesses the cache server 40 for the IO nodes 20 with the identification information "IO-1" and "IO-2". For the IO node 20 with the identification information "IO-3", none of the controllers 30 yet access the cache server 40. In the example in FIG. 5, at any of the control timings, none of the controllers 30 yet access the cache server 40 for any of the IO nodes 20.

When managing access from multiple controllers 30 to multiple IO nodes 20, the cache server 40 may classify the controllers 30 and the IO nodes 20 into multiple control groups, and hold a management table 41 for each control group. For example, a control group such as "C001" may be set for multiple controllers 30 that are subject to redundancy. For example, the cache server 40 may classify the controllers 30 and the IO nodes 20 into multiple control groups, according to which controller 30 performs calculation on measurement data on field instruments 10 connected to which IO node 20. For example, the management table 41 in FIG. 4 may indicate access management for a control group 1 in which the controllers 30 with the identification information "CNT-1" and "CNT-2" control the IO nodes 20 with the identification information "IO-1", "IO-2", and "IO-3". For example, the management table 41 in FIG. 5 may indicate access management for a control group 2 in which controllers 30 with identification information "CNT-X" and "CNT-Y" control the IO nodes 20 with identification information "IO-5" and "IO-6". The controllers 30 included in the same control group perform the same control calculation.

Return to the explanation of FIG. 3. The access path controller 42, communication controller 43, and virtualizer 44 of the cache server 40 have the same or similar functions as the access path controller 22, communication controller 23, and virtualizer 24 of the IO node 20, so a detailed explanation is omitted.

At each control timing, the cache database 45 stores, as a cache, the measurement data acquired from the IO node 20 by the controller 30 that has earliest accessed the cache server 40. As illustrated in FIG. 1, when the multiple field instruments 10a, 10b are connected to the IO node 20, the cache database 45 may store the measurement data on each field instrument 10. As described above, when the control system 1a includes multiple IO nodes 20, the cache database 45 may store, for each IO node 20, the measurement data acquired from each IO node 20. As described above, when the control system 1a manages access from the multiple controllers 30 to the multiple IO nodes 20, which are classified into the multiple control groups, the cache database 45 may store, for each control group, the measurement data acquired from each IO node 20.

### (IO node)

FIG. 6 is a block diagram illustrating an example of a hardware configuration of the IO node 20 in FIG. 2. The IO node 20 is one or multiple computer devices that can communicate with each other. The IO node 20 is implemented by a general purpose computer such as a personal computer (PC) or workstation (WS), but may be implemented by a field programmable gate array (FPGA), a dedicated computer designed for controlling the plant or other facilities, or the like. As illustrated in FIG. 6, the IO node 20 includes a controller 201, a memory 202, and a communication interface 203.

The controller 201 includes one or more processors. In one embodiment, the "processor" is a general purpose processor or a dedicated processor specialized for specific processing, but is not limited to these. The controller 201 is communicably connected to each component that constitutes the IO node 20, and controls overall operations of the IO node 20.

The memory 202 includes any memory module, e.g., a hard disk drive (HDD), a solid state drive (SSD), a read-only memory (ROM), a random access memory (RAM), and the like. The memory 202 may function as a main memory, an auxiliary memory, or a cache memory, for example. The memory 202 stores any information used for the operations of the IO node 20. For example, the memory 202 may store a system program (operating system), an application program, and various types of information received by the communication interface 203. The memory 202 is not limited to being built into the IO node 20, but may be an external database or an external memory module.

The communication interface 203 includes any communication module that can be communicably connected to other devices such as the field instruments 10 and the controllers 30, using any communication technology. The communication interface 203 may further include a communication control module for controlling communication with other devices, and a memory module for storing communication data such as identification information required for communication with other devices.

The functions of the IO node 20 can be achieved by executing a computer program (program) according to the present embodiment on a processor included in the controller 201. In other words, the functions of the IO node 20 can be achieved by software. The computer program causes a computer to execute processing of steps included in the operations of the IO node 20, thereby causing the computer to achieve a function corresponding to processing of each step. In other words, the computer program is a program for causing the computer to function as the IO node 20 according to the present embodiment. The computer program may be recorded on a computer-readable recording medium. The program includes information that is used for processing by an electronic computer and is equivalent to a program. For example, data that is not a direct command to a computer but has the property of specifying processing of the computer falls under the category of "equivalent to a program".

Some or all of the functions of the IO node 20 may be implemented by a dedicated circuit included in the controller 201. In other words, some or all of the functions of the IO node 20 may be implemented by hardware. The IO node 20 may be implemented by a single computer device, or may be implemented by cooperation of multiple computer devices.

### (Controller)

FIG. 7 is a block diagram illustrating an example of a hardware configuration of the controller 30 in FIG. 2. The controller 30 is one or multiple computer devices that can communicate with each other. The controller 30 is implemented by a general purpose computer such as a PC or WS, but may be implemented by an FPGA, a dedicated computer designed for controlling the plant or other facilities, or the like. As illustrated in FIG. 7, the controller 30 includes a controller 301, a memory 302, and a communication interface 303. The controller 301, memory 302, and communication interface 303 of the controller 30 are implemented in the same manner as the controller 201, memory 202, and communication interface 203 of the IO node 20, so a detailed explanation is omitted. As with the IO node 20, the functions of the controller 30 can be achieved by executing a program according to the present embodiment on a processor included in the controller 301.

### (Cache Server)

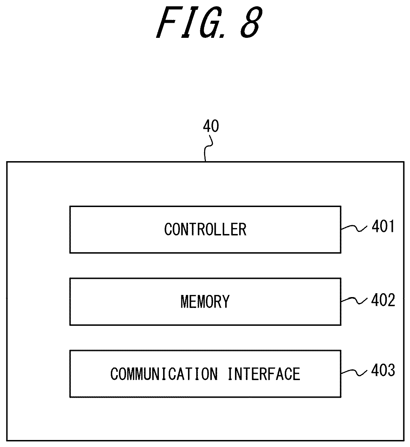

FIG. 8 is a block diagram illustrating an example of a hardware configuration of the cache server 40 in FIG. 2. The cache server 40 is one or multiple computer devices that can communicate with each other. The cache server 40 is implemented by a general purpose computer such as a PC or WS, but may be implemented by an FPGA, a dedicated computer designed for controlling the plant or other facilities, or the like. As illustrated in FIG. 8, the cache server 40 includes a controller 401, a memory 402, and a communication interface 403. The controller 401, memory 402, and communication interface 403 of the cache server 40 are implemented in the same manner as the controller 201, memory 202, and communication interface 203 of the IO node 20, so a detailed explanation is omitted. As with the IO node 20, the functions of the cache server 40 can be achieved by executing a program according to the present embodiment on a processor included in the controller 401.

### (Operations of Control System)

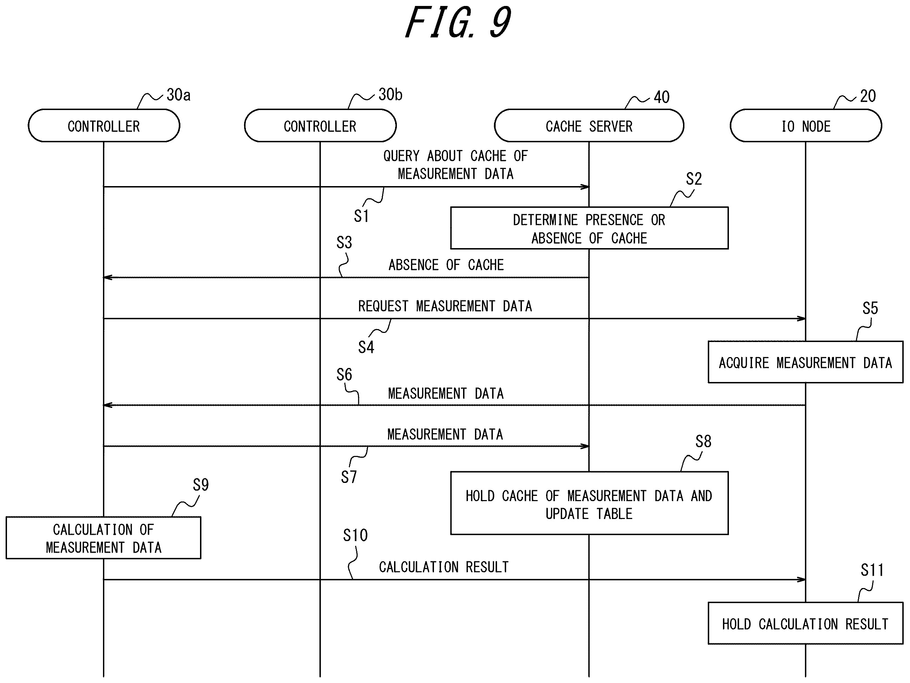

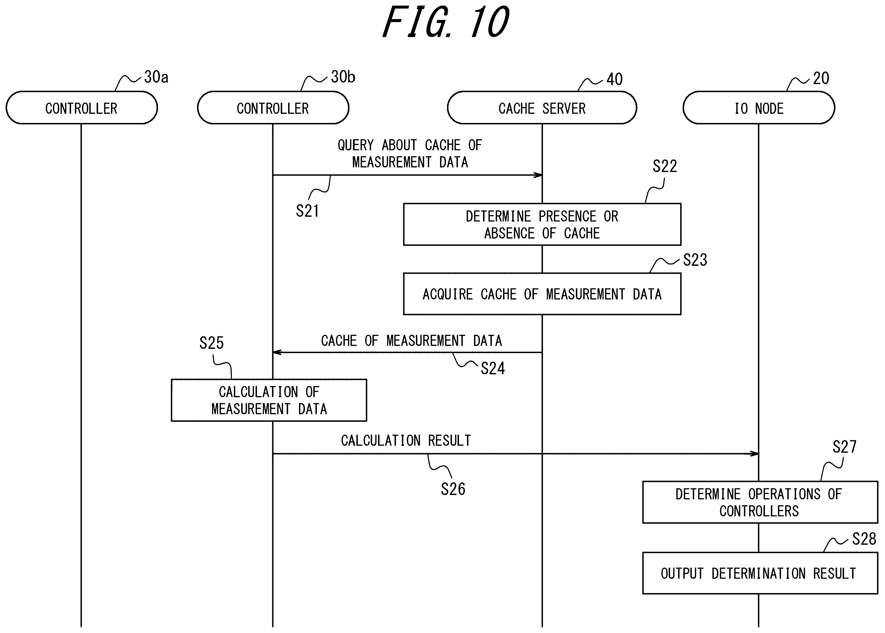

FIGS. 9 and 10 are sequence charts illustrating an example of operations of the control system 1a according to one embodiment. The operations of the control system 1a explained with reference to FIGS. 9 and 10 may correspond to one of control methods of the control system 1a. An operation of each step in FIGS. 9 and 10 may be performed based on control by the controller 201 of the IO node 20, the controller 301 of the controller 30, or the controller 401 of the cache server 40. Processing in FIGS. 9 and 10 is executed at each control timing, for example, every second. FIGS. 9 and 10 illustrate the example in which, at a certain control timing, the controller 30a first accesses the cache server 40, and then the controller 30b accesses the cache server 40. FIG. 9 illustrates processing in which the controller 30a acquires measurement data and performs calculation. FIG. 10 illustrates processing in which the controller 30b acquires measurement data and performs calculation. Hereinafter, an example in which the control system 1a has one IO node 20, as illustrated in FIG. 2, is explained.

In step S1 of FIG. 9, the controller 301 of the controller 30a queries the cache server 40 whether a cache of measurement data on the field instruments 10 connected to the IO node 20 is stored in the cache database 45. For example, the access path controller 32a of the controller 30a may perform the query.

In step S2, the controller 401 of the cache server 40 determines whether the cache of the measurement data, which has been queried in step S1, is stored. For example, the controller 401 may determine the presence or absence of the cache by determining, with reference to the management table 41, whether access from the controller 30 is recorded for the corresponding control timing and IO node 20. The example in FIG. 9 illustrates a case in which the controller 30a has first gotten access at the certain control timing, so the controller 401 determines that the cache is absent.

In step S3, the controller 401 of the cache server 40 notifies the controller 30a of the absence of the cache.

Upon receiving, from the cache server 40, the notification indicating the absence of the cache, in step S4, the controller 301 of the controller 30a requests the IO node 20 for the measurement data on the field instruments 10. For example, the control application 31a of the controller 30a may request data acquisition.

Upon receiving the request for the measurement data from the controller 30a, in step S5, the controller 201 of the IO node 20 acquires the measurement data on the field instruments 10. As described above, the IO node 20 collects the measurement data from the field instruments 10 at regular intervals (e.g., every second), and stores the collected measurement data in the memory 202. Accordingly, the controller 201 acquires the measurement data by reading the measurement data from the memory 202. The controller 201 may acquire the measurement data from the field instruments 10 in response to receiving the request for the measurement data from the controller 30.

In step S6, the controller 201 of the IO node 20 transmits, to the controller 30a, the measurement data on the field instruments 10 acquired in step S5.

Upon receiving the measurement data on the field instruments 10 from the IO node 20, in step S7, the controller 301 of the controller 30a stores the received measurement data in the memory 302, and also transmits the measurement data to the cache server 40.

Upon receiving the measurement data on the field instruments 10 from the controller 30a, in step S8, the controller 401 of the cache server 40 stores the received measurement data in the cache database 45, and updates the management table 41. For example, the controller 401 may update, in the management table 41 of the corresponding control group, an item corresponding to the IO node 20 of the corresponding control timing, with the identification information on the controller 30a.

On the other hand, in step S9, the controller 301 of the controller 30a performs predetermined calculation based on the measurement data acquired in step S7. For example, the control application 21a of the controller 30a may perform the calculation. The contents of the calculation are set in advance according to the types of the field instruments 10, or the like.

In step S10, the controller 301 of the controller 30a transmits, to the IO node 20, a calculation result by the processing in step S9. Note that, the control system 1a may perform the processing in steps S9 and S10, before steps S7 and S8.

Upon receiving the calculation result from the controller 30a, in step S11, the controller 201 of the IO node 20 stores and holds the calculation result, which is received from the controller 30a, in the memory 202.

Next, in step S21 of FIG. 10, the controller 301 of the controller 30b queries the cache server 40 whether a cache of the measurement data on the field instruments 10 connected to the IO node 20 is stored in the cache database 45. For example, the virtualizer 34b of the controller 30b may perform the query.

In step S22, the controller 401 of the cache server 40 determines whether the cache of the measurement data, which has been queried in step S21, is stored. For example, the controller 401 may determine the presence or absence of the cache by determining, with reference to the management table 41, whether access from the controller 30 is recorded for the corresponding control timing and IO node 20. The example in FIG. 10 illustrates a case in which the controller 30a has already gotten access at the corresponding control timing, so the controller 401 determines that the cache is present.

Therefore, in step S23, the controller 401 of the cache server 40 reads and acquires the cache of the measurement data held in the cache database 45 in step S8 of FIG. 9. Specifically, the controller 401 may acquire the measurement data for the corresponding control timing stored in correspondence with the identification information on the IO node 20 of the corresponding control group.

In step S24, the controller 401 of the cache server 40 transmits, to the controller 30b, the cache of the measurement data acquired in step S23.

Upon receiving the cache of the measurement data from the cache server 40, in step S25, the controller 301 of the controller 30b performs predetermined calculation based on the acquired cache of the measurement data. For example, the control application 21b of the controller 30b may perform the calculation. The contents of the calculation are the same as those of the calculation performed by the controller 30a.

In step S26, the controller 301 of the controller 30b transmits, to the IO node 20, a calculation result by processing in step S25.

Upon receiving the calculation result from the controller 30b, in step S27, the controller 201 of the IO node 20 determines whether the controllers 30a and 30b are operating normally by comparing the calculation result with the calculation result from the controller 30a, which is held in step S11 of FIG. 9. For example, when the calculation results from the controllers 30a and 30b match, the controller 201 may determine that every controller 30a, 30b is operating normally, and otherwise, the controller 201 may determine that not every controller 30a, 30b is operating normally. When the control system 1a includes three or more controllers 30, in the same manner, the controller 201 may determine that every controller 30 is operating normally when calculation results from all the controllers 30 match, and that not every controller 30 is operating normally when the calculation results do not match.

In step S28, the controller 201 of the IO node 20 outputs a result of the determination made in step S27. For example, the controller 201 may output the determination result as a log file to the memory 202. Alternatively, the controller 201 may display the determination result on a display device (display) or the like, or transmit the determination result to other devices such as the controllers 30 or the cache server 40. The controller 201 may perform such output when it is determined in step S27 that not every controllers 30a, 30b is operating normally.

As described above, the control system 1a includes the IO node 20 to which the field instruments 10 that acquire measurement data are connected, the multiple controllers 30a, 30b that perform calculation based on the measurement data acquired by the field instruments 10, and the cache server 40. At each of control timings that are regular periods of time predetermined at regular intervals, the controller 301 of each of the multiple controllers 30a, 30b determines whether the cache server 40 is holding the measurement data acquired by the field instruments 10, by querying the cache server 40. When the cache server 40 is not holding the measurement data, the controller 301 acquires, from the IO node 20, the measurement data acquired by the field instruments 10 connected to the IO node 20. When the cache server 40 is holding the measurement data, the controller 301 acquires, from the cache server 40, the measurement data acquired by the field instruments 10. The controller 301 performs the predetermined calculation, based on the measurement data received from the IO node 20 or the cache server 40. Therefore, even when the operation timings of the controllers 30 are out of synchronization, all of the controllers 30 can perform the calculation based on the same measurement data at the control timing.

The controller 301 of each of the multiple controllers 30a, 30b may transmit, at each of the control timings to the IO node 20, a calculation result, which is the result of the calculation based on the measurement data received from the IO node 20 or the cache server 40. The controller 201 of the IO node 20 may determine, at each of the control timings, whether the operations of the multiple controllers 30a, 30b are normal, by comparing the calculation results received from the multiple controllers 30a, 30b. The controller 201 may output the determination result of whether the operations of the multiple controllers 30a, 30b are normal. Accordingly, the control system 1a can detect an anomaly in the controllers 30 by comparing the calculation results of the multiple controllers 30a, 30b. In addition, the control system 1a can prevent the use of the calculation result of the controller 30a, 30b that has failed to transmit the calculation result within the control timing, in determining whether the operations are abnormal.

Upon acquiring, from the IO node 20, the measurement data acquired by the field instruments 10 connected to the IO node 20, the controller 301 of each of the multiple controllers 30a, 30b may transmit the acquired measurement data to the cache server 40. Upon receiving the measurement data from the controller 30 included in the multiple controllers 30a, 30b, the controller 401 of the cache server 40 may cause the memory 402 to hold the received measurement data. Therefore, the control system 1a enables, by making and holding a cache of the measurement data received from the controller 30 that has first accessed the cache server 40, the other controller 30 to perform the calculation based on this measurement data.

The controller 401 of the cache server 40 may record, at each control timing in the management table 41, the identification information on the controller 30 that has received the measurement data. In this way, recording the identification information on the controller 30 that has transmitted the cache of the measurement data makes it possible to identify the controller 30 that has transmitted the cache data.

The controller 401 of the cache server 40 may, at each control timing, from the time of first receiving, from any controller 30 (e.g., controller 30a) included in the multiple controllers 30a, 30b, a query whether the cache server 40 is holding the measurement data acquired by the field instruments 10, until the time of receiving the measurement data from that controller 30a, withhold a reply to a query from the other controller (e.g., controller 30b). Specifically, for example, even when a query is received from the controller 30b (S21) from the time when a query is received from the controller 30a in step S1 of FIG. 9, until the time when the measurement data is held in a cache in step S8, the cache server 40 may not immediately respond to the query from the controller 30b. This ensures that, even when another controller 30b makes a query while a certain controller 30a is acquiring the measurement data from the IO node 20, all the controllers acquire the same measurement data, without access of the other controller 30b to the IO node 20.

In the above example of the embodiment, the example in which the cache server 40 has the management table 41 has been explained, but each controller 30 may also have a management table (second management table) that is managed in synchronization with the management table 41 (first management table) of the cache server 40. With such a configuration, the controller 30 can determine which of the IO node 20 or the cache server 40 the controller 30 should acquire the measurement data from, without querying the cache server 40. Also, the example in which the IO node 20 periodically acquires the measurement data from the field instruments 10 has been explained, but is not limited to such processing. For example, the field instruments 10a, 10b may each independently transmit the measurement data to the IO node 20.

### <Embodiment 2>

Embodiment 1 has explained the example in which the virtualizer 34 of the controller 30 controls where the measurement data is acquired from, but another device such as a network (NW) switch may control where the measurement data is acquired from.

### (Control System)

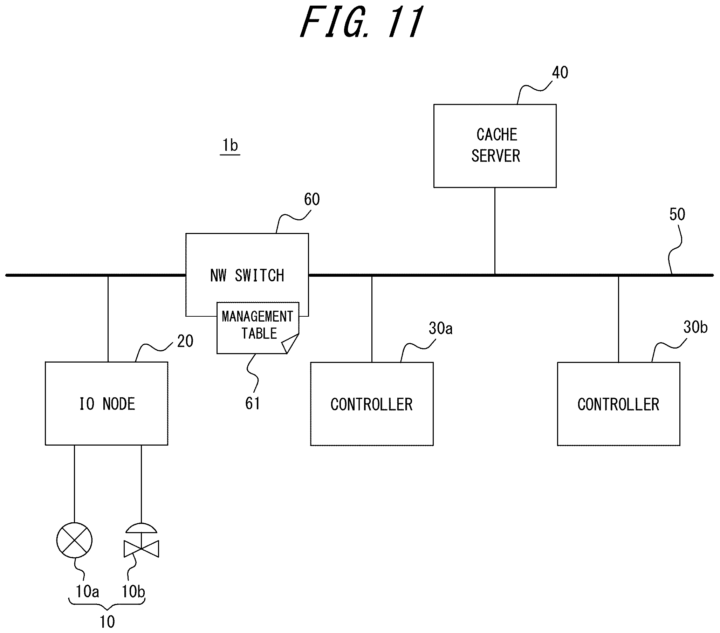

FIG. 11 is a diagram illustrating an example of a schematic configuration of a control system 1b according to Embodiment 2. The control system 1b includes field instruments 10 (10a, 10b), an IO node 20, controllers 30 (30a, 30b), a cache server 40, a network 50, and a network switch 60. The functions and configuration of the field instruments 10 (10a, 10b), IO node 20, controllers 30 (30a, 30b), cache server 40, and network 50 are the same as those of the control system 1a in FIG. 2, so only contents different from the configuration of Embodiment 1 are explained.

In the control system 1b, the network switch 60, instead of or in addition to the cache server 40, holds a management table 61. The management table 61 of the network switch 60 is the same as the management table 41 of the cache server 40, and may contain the same information as that illustrated in FIGS. 4 and 5, for example. In the control system 1b, the multiple controllers 30a, 30b transmit, at each control timing to the network switch 60, requests to the IO node 20 for measurement data acquired by the field instruments 10. The network switch 60 determines whether the cache server 40 is holding the measurement data, with reference to the management table 61. When the cache server 40 is not holding the measurement data, the network switch 60 causes the IO node 20 to transmit the measurement data acquired by the field instruments 10 connected to the IO node 20 to the controller 30 via the network switch 60. The network switch 60 transmits the measurement data received from the IO node 20 to the cache server 40, to cause the cache server 40 to hold the measurement data. On the other hand, when the cache server 40 is holding the measurement data, the network switch 60 causes the cache server 40 to transmit the measurement data acquired by the field instruments 10 to the controller 30. Each of the multiple controllers 30 performs predetermined calculation based on the measurement data received from the IO node 20 or the cache server 40. Specifically, the network switch 60 may switch communication destinations, for example, by rewriting the IP addresses or the like of packets received from the controllers 30, IO node 20, and cache server 40.

With such a configuration, it appears that the controllers 30 access the same device, but in reality, it is possible to cause all the controllers 30 to acquire the common measurement data from the IO node 20 or the cache server 40, depending on the presence or absence of a cache. Note that, even in a configuration with the network switch 60, the access path controller 32 of each controller 30, rather than the network switch 60, may perform the switching of an access destination.

### (Network Switch)

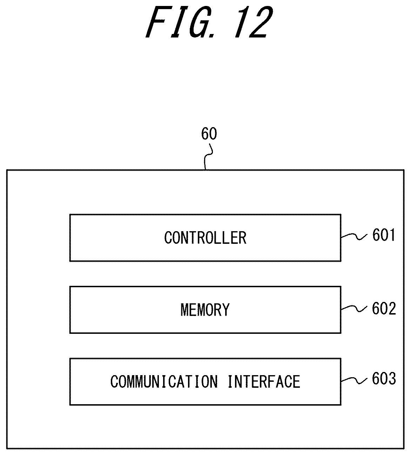

FIG. 12 is a block diagram illustrating an example of a hardware configuration of the network switch 60 in FIG. 11. The network switch 60 is one or multiple computer devices that can communicate with each other. The network switch 60 is implemented, for example, by an FPGA, a dedicated computer designed for controlling a plant or other facilities, or the like, but may also be implemented by a general purpose device such as a PC. As illustrated in FIG. 12, the network switch 60 includes a controller 601, a memory 602, and a communication interface 603. The controller 601, memory 602, and communication interface 603 of the network switch 60 are implemented in the same manner as the controller 201, memory 202, and communication interface 203 of the IO node 20, so detailed explanations are omitted. As with the IO node 20, the functions of the network switch 60 can be realized by executing a program according to the present embodiment on a processor included in the controller 601.

### (Operations of Control System)

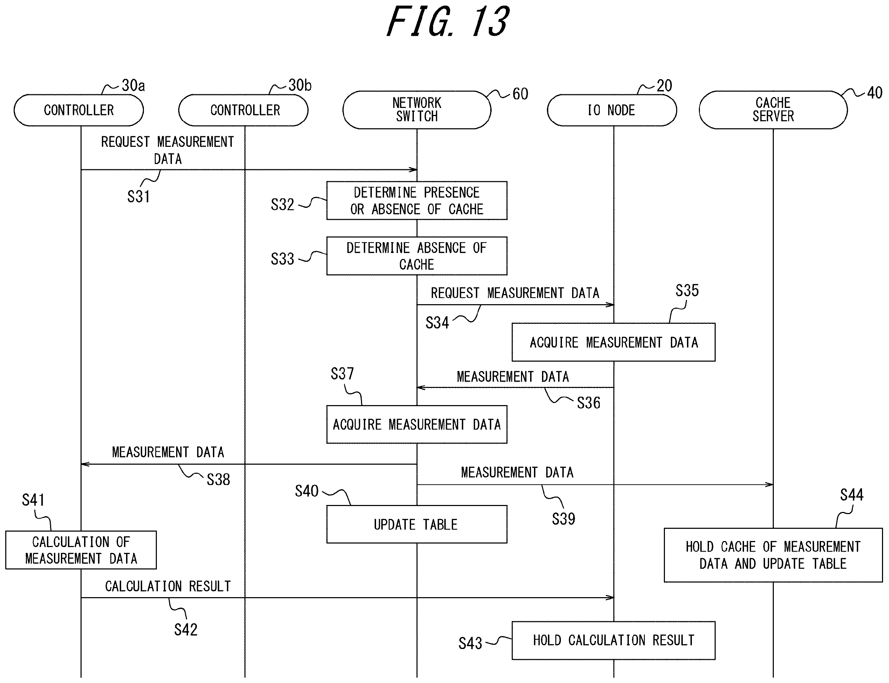

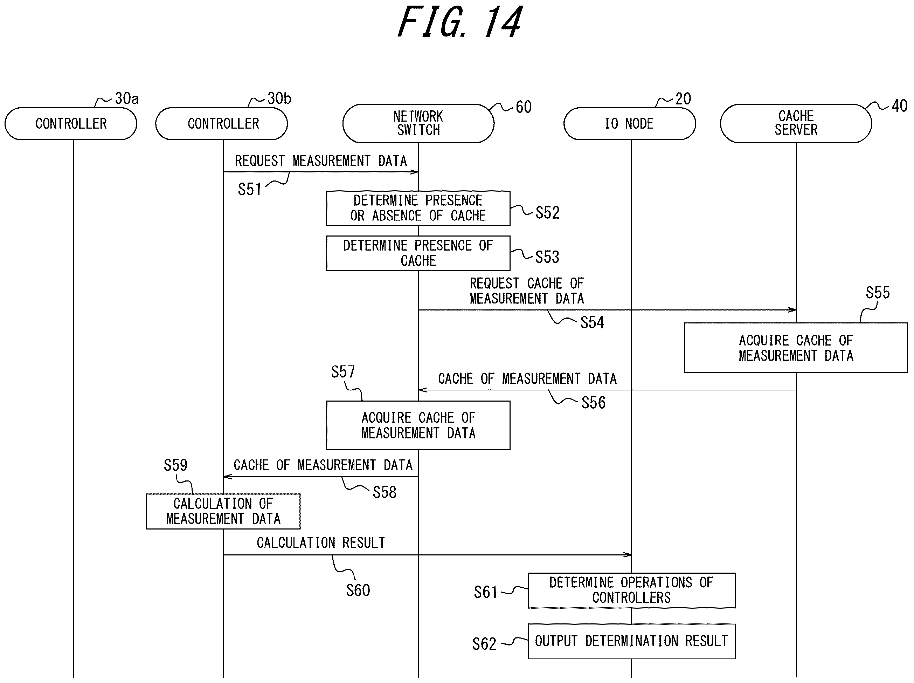

FIGS. 13 and 14 are sequence charts illustrating an example of operations of the control system 1b according to one embodiment. The operations of the control system 11b explained with reference to FIGS. 13 and 14 may correspond to one of control methods of the control system 1b. An operation of each step in FIGS. 13 and 14 may be performed based on control by the controller 201 of the IO node 20, the controller 301 of the controller 30, the controller 401 of the cache server 40, or the controller 601 of the network switch 60. Processing in FIGS. 13 and 14 is executed at each control timing, for example, every second. FIGS. 13 and 14 illustrate an example in which, at a certain control timing, the controller 30a first accesses the network switch 60, and then the controller 30b accesses the network switch 60. FIG. 13 illustrates processing in which the controller 30a acquires measurement data and performs calculation. FIG. 14 illustrates processing in which the controller 30b acquires measurement data and performs calculation. Hereinafter, an example in which the control system 1b has one IO node 20, as illustrated in FIG. 11, is explained.

In step S31 of FIG. 13, the controller 301 of the controller 30a requests the network switch 60 for measurement data on the field instruments 10 connected to the IO node 20. For example, the access path controller 32a of the controller 30a may make the request.

In step S32, the controller 601 of the network switch 60 determines whether the measurement data requested in step S31 is stored in the cache server 40. For example, the controller 601 may determine the presence or absence of a cache by determining, with reference to the management table 61 held by the network switch 60 itself, whether access from the controller 30 is recorded for the corresponding control timing and IO node 20. The example in FIG. 13 illustrates a case in which the controller 30a has first accessed at a certain control timing, so the controller 601 determines that the cache is absent (step S33).

In step S34, the controller 601 of the network switch 60 requests the IO node 20 for the measurement data on the field instruments 10. For example, the controller 601 may transmit the request for the measurement data to the IO node 20 by rewriting the IP address or the like of a packet that is received from the controller 30a in step S31.

Upon receiving the request for the measurement data from the network switch 60, in step S35, the controller 201 of the IO node 20 acquires the measurement data on the field instruments 10. As described above, the IO node 20 collects the measurement data from the field instruments 10 at regular intervals (e.g., every second), and stores the collected measurement data in the memory 202. Accordingly, the controller 201 acquires the measurement data by reading the measurement data from the memory 202. The controller 201 may acquire the measurement data from the field instruments 10 in response to receiving the request for the measurement data from the network switch 60.

In step S36, the controller 201 of the IO node 20 transmits, to the network switch 60, the measurement data on the field instruments 10 acquired in step S35.

In step S37, the controller 601 of the network switch 60 receives and acquires the measurement data on the field instruments 10 from the IO node 20.

In step S38, the controller 601 of the network switch 60 transmits, to the controller 30a, the measurement data acquired in step S37. For example, the controller 601 may transmit the measurement data to the controller 30a by rewriting the IP address or the like of a packet that is received from the IO node 20 in step S36.

In step S39, the controller 601 of the network switch 60 transmits, to the cache server 40, the measurement data acquired in step S37.

In step S40, the controller 601 of the network switch 60 updates the management table 61. For example, the controller 401 may update, in the management table 61 of the corresponding control group, an item corresponding to the IO node 20 of the corresponding control timing, with the identification information on the controller 30a.

On the other hand, in step S41, the controller 301 of the controller 30a performs predetermined calculation based on the measurement data acquired in step S38. For example, the control application 21a of the controller 30a may perform the calculation. The contents of the calculation are set in advance according to the types of the field instruments 10, or the like.

In step S42, the controller 301 of the controller 30a transmits, to the IO node 20, a calculation result by the processing in step S41. Note that, the control system 1b may perform the processing in steps S41 and S42, before steps S39 and S40.

Upon receiving the calculation result from the controller 30a, in step S43, the controller 201 of the IO node 20 stores and holds the calculation result, which is received from the controller 30a, in the memory 202.

On the other hand, upon receiving the measurement data on the field instruments 10 from the network switch 60, in step S44, the controller 401 of the cache server 40 stores the received measurement data in the cache database 45 and updates the management table 41. For example, the controller 401 may update, in the management table 41 of the corresponding control group, an item corresponding to the IO node 20 at the corresponding control timing, with the identification information on the controller 30a.

Next, in step S51 of FIG. 14, the controller 301 of the controller 30b requests the network switch 60 for the measurement data on the field instruments 10 connected to the IO node 20. For example, the virtualizer 34b of the controller 30b may make the request.

In step S52, the controller 601 of the network switch 60 determines whether the measurement data requested in step S51 is stored in the cache server 40. For example, the controller 601 may determine the presence or absence of a cache by determining, with reference to the management table 61, whether access from the controller 30 is recorded for the corresponding control timing and IO node 20. The example in FIG. 14 illustrates a case in which the controller 30a has already gotten access at the corresponding control timing, so the controller 601 determines that the cache is present (step S53).

Therefore, in step S54, the controller 601 of the network switch 60 requests the cache server 40 for the cache of the measurement data held in the cache database 45 in step S44 of FIG. 13. For example, the controller 601 may transmit the request for the measurement data to the cache server 40 by rewriting the IP address or the like of a packet received from the controller 30b in step S51. Specifically, the controller 601 may request the cache of the measurement data at the corresponding control timing, which is stored in correspondence with the identification information on the IO node 20 of the corresponding control group.

In step S55, the controller 401 of the cache server 40 acquires, from the cache database 45, the cache of the measurement data requested by the network switch 60.

In step S56, the controller 401 of the cache server 40 transmits, to the network switch 60, the cache of the measurement data acquired in step S55.

In step S57, the controller 601 of the network switch 60 receives and acquires, from the cache server 40, the cache of the measurement data on the field instruments 10.

In step S58, the controller 601 of the network switch 60 transmits, to the controller 30b, the cache of the measurement data acquired in step S57. For example, the controller 601 may transmit the cache of the measurement data to the controller 30b by rewriting the IP address or the like of a packet that is received from the cache server 40 in step S56.

Upon receiving the cache of the measurement data, in step S59, the controller 301 of the controller 30b performs the predetermined calculation based on the acquired cache of the measurement data. For example, the control application 21b of the controller 30b may perform the calculation. The contents of the calculation are the same as those performed by the controller 30a.

In step S60, the controller 301 of the controller 30b transmits, to the IO node 20, a calculation result by processing in step S59.

Upon receiving the calculation result from the controller 30b, in step S61, the controller 201 of the IO node 20 determines whether the controllers 30a and 30b are operating normally by comparing the calculation result with the calculation result from the controller 30a, which is held in step S43 of FIG. 13. For example, when the calculation results from the controllers 30a and 30b match, the controller 201 may determine that every controller 30a, 30b is operating normally, and otherwise, the controller 201 may determine that not every controller 30a, 30b is operating normally. When the control system 1b includes three or more controllers 30, in the same manner, the controller 201 may determine that every controller 30 is operating normally when calculation results from all the controllers 30 match, and that not every controller 30 is operating normally when the calculation results do not match.

In step S62, the controller 201 of the IO node 20 outputs a result of the determination made in step S61. For example, the controller 201 may output the determination result as a log file to the memory 202. Alternatively, the controller 201 may display the determination result on a display device (display) or the like, or transmit the determination result to other devices such as the controllers 30, the cache server 40, or the network switch 60. The controller 201 may perform such output when it is determined in step S61 that not every controller 30a, 30b is operating normally.

As described above, according to the control systems 1a and 1b of the present disclosure, the multiple controllers 30, which operate asynchronously, can acquire data of the same timing. Therefore, even when the operations of the controllers 30 are not precisely synchronized, it is possible to detect an anomaly in the controllers 30 by comparing the calculation results of the controllers 30.

The methods of the control systems 1a and 1b may also be applied to guaranteeing the arrival of packets in multicast or broadcast pub/sub communication. When multicast or broadcast is used for pub/sub communication, the User Datagram Protocol (UDP) is used as a communication protocol. In contrast to the Transmission Control Protocol (TCP), the UDP does not have a mechanism for confirming delivery, so there is no guarantee that transmitted data can be received reliably. Therefore, processing is required when data cannot be received.

For example, in the control system 1a illustrated in FIG. 2, consider a case in which the IO node 20 acquires measurement data from the field instruments 10 at any timing, and distributes (publishes) control timing information (T001) and the measurement data to each of nodes including the controllers 30 and the cache server 40. In this case, each node (controllers 30a, 30b, and cache server 40) waits for data from the IO node 20 and receives (subscribes) the data. When the controller 30 can receive measurement data for a node to be used at a control timing T001, the controller 30 performs calculation using that data. The controller 30 also causes the cache server 40 to hold the received measurement data. When the controller 30a, 30b cannot receive measurement data to be used, the controller 30a, 30b transmits a data acquisition request to the cache server 40 and acquires the data.

In this way, when the controller 30 can receive the measurement data at the control timing, the controller 30 performs the calculation based on that measurement data, and causes the cache server 40 to hold the measurement data. When the controller 30 cannot receive the measurement data at the control timing, the controller 30 accesses the cache server 40 to acquire the necessary measurement data and performs the predetermined calculation. Therefore, even when the measurement data on the field instruments 10 is multicast or broadcast from the IO node 20, rather than the controller 30 accesses the IO node 20, each controller 30 can perform the calculation based on the same measurement data. Therefore, it is possible to detect an anomaly in the controllers 30 by comparing the calculation results of the controllers 30.

The present disclosure is not limited to the above-described embodiments. For example, multiple blocks illustrated in the block diagram may be integrated, or one block may be divided. Multiple steps illustrated in the flowchart may be executed in parallel or in different orders, depending on the processing capacity of the device executing each step or as needed, instead of being executed sequentially according to the description. Other modifications are also possible within the scope of not deviating from the gist of the present disclosure.

### REFERENCE SIGNS LIST

- 1, 1a: control system
- 10: field instrument
- 20: IO node
- 21: control application
- 22: virtualizer
- 23: communication controller
- 24: access path controller
- 201: controller
- 202: memory
- 203: communication interface
- 30: controller
- 31: control application
- 32: virtualizer
- 33: communication controller
- 34: access path controller
- 301: controller
- 302: memory
- 303: communication interface
- 40: cache server
- 41: management table
- 42: virtualizer
- 43: communication controller
- 44: access path controller
- 45: cache database
- 401: controller
- 402: memory
- 403: communication interface
- 50: network
- 60: network switch
- 61: management table
- 601: controller
- 602: memory
- 603: communication interface

## Claims

1. A control system comprising:
an IO node to which a field instrument configured to acquire measurement data is connected;
multiple controllers configured to perform calculation based on the measurement data acquired by the field instrument; and
a cache server,
wherein each of the multiple controllers is configured to:
at each of control timings that are regular periods of time predetermined at regular intervals, determine whether the measurement data acquired by the field instrument is being held;
when the cache server is not holding the measurement data, acquire, from the IO node, the measurement data acquired by the field instrument connected to the IO node;
when the cache server is holding the measurement data, acquire, from the cache server, the measurement data acquired by the field instrument; and
perform predetermined calculation based on the measurement data received from the IO node or the cache server.

2. The control system according to claim 1, wherein each of the multiple controllers is configured to, at each of the control timings, query the cache server whether the cache server is holding the measurement data, and determine whether the cache server is holding the measurement data, based on a reply of the cache server to the query.

3. The control system according to claim 1, wherein
the cache server is configured to hold a first management table containing information indicating, at each of the control timings, whether the cache server is holding the measurement data, and
each of the multiple controllers is configured to:
hold a second management table that is managed in synchronization with the first management table held by the cache server; and
at each of the control timings, determine whether the cache server is holding the measurement data, with reference to the second management table.

4. The control system according to any one of claims 1 to 3, wherein
each of the multiple controllers is configured to transmit, at each of the control timings to the IO node, a calculation result that is a result of the calculation based on the measurement data received from the IO node or the cache server, and
the IO node is configured to:
at each of the control timings, determine whether operations of the multiple controllers are normal, by comparing the calculation results received from the respective multiple controllers; and
output a determination result of whether the operations of the multiple controllers are normal.

5. The control system according to any one of claims 1 to 4, wherein
upon acquiring, from the IO node, the measurement data acquired by the field instrument connected to the IO node, each of the multiple controllers is configured to transmit the acquired measurement data to the cache server,
upon receiving the measurement data from the controller included in the multiple controllers, the cache server is configured to cause a memory to hold the received measurement data.

6. The control system according to claim 5, wherein the cache server is configured to, at each of the control timings, record identification information on the controller from which the measurement data is received.

7. The control system according to claim 5 or 6, wherein at each of the control timings, from time of first receiving, from any controller included in the multiple controllers, a query whether the cache server is holding the measurement data acquired by the field instrument, until time of receiving the measurement data from that controller, the cache server is configured to withhold a reply to a query from another controller.

8. A control method for a control system including:
an IO node to which a field instrument configured to acquire measurement data is connected;
multiple controllers configured to perform calculation based on the measurement data acquired by the field instrument; and
a cache server,
the control method comprising:
at each of control timings that are regular periods of time predetermined at regular intervals, determining, by each of the multiple controllers, whether the measurement data acquired by the field instrument is being held;
when the cache server is not holding the measurement data, acquiring, by each of the multiple controllers from the IO node, the measurement data acquired by the field instrument connected to the IO node;
when the cache server is holding the measurement data, acquiring, by each of the multiple controllers from the cache server, the measurement data acquired by the field instrument; and
performing, by each of the multiple controllers, predetermined calculation based on the measurement data received from the IO node or the cache server.

9. A controller configured to be communicable with a cache server, and an IO node to which a field instrument configured to acquire measurement data is connected, the controller configured to perform calculation based on the measurement data acquired by the field instrument, the controller comprising a controller configured to:
determining, at each of control timings that are regular periods of time predetermined at regular intervals, whether the measurement data acquired by the field instrument is being held;
when the cache server is not holding the measurement data, acquiring, from the IO node, the measurement data acquired by the field instrument connected to the IO node;
when the cache server is holding the measurement data, acquiring, from the cache server, the measurement data acquired by the field instrument; and
performing predetermined calculation based on the measurement data received from the IO node or the cache server.
